# EUROPEAN PATENT SPECIFICATION

(11) **EP 2 929 540 B1**
(45) Date of publication and mention of the grant of the patent: **20.09.2017**
(21) Application number: 13850001.2
(22) Date of filing: 21.10.2013
(51) Int. Cl.: G21G 1/02, G21C 19/20

(54) **SYSTEMS AND METHODS FOR RETAINING AND REMOVING IRRADIATION TARGETS IN A NUCLEAR REACTOR**
SYSTEME UND VERFAHREN ZUM HALTEN UND ENTFERNEN VON BESTRAHLUNGSZIELEN IN EINEM KERNREAKTOR
SYSTÈMES ET PROCÉDÉS PERMETTANT DE RETENIR ET DE SUPPRIMER DES CIBLES D'IRRADIATION DANS UN RÉACTEUR NUCLÉAIRE

(30) Priority: 10.12.2012 US 201213710090
(43) Date of publication of application: 14.10.2015
(73) Proprietor: Ge-Hitachi Nuclear Energy Americas LLC, Wilmington, NC 28401 (US)
(72) Inventor: RUNKLE, Gary, A., Wilmington, NC 28401 (US); MATSUMOTO, Jack, Toshio, Wilmington, NC 28401 (US); DAYAL, Yogeshwar, Wilmington, NC 28401 (US); HEINOLD, Mark, R, Wilmington, NC 28401 (US)
(74) Representative: Williams, Andrew Richard
(86) International application number: PCT/US2013/065809
(87) International publication number: WO 2014/107218

(56) References cited:
- EP-A2- 2 093 773
- US-A1- 2007 086 556
- US-A1- 2011 051 875
- US-A1- 2011 216 870
- US-A1- 2013 177 126

## Description

### GOVERNMENT SUPPORT

This invention was made with Government support under contract number DE-FC52-09NA29626, awarded by the U.S. Department of Energy. The Government has certain rights in the invention.

### BACKGROUND

Elements, and specific isotopes thereof, may be formed by bombarding parent materials with appropriate radiation to cause a conversion to desired daughter isotopes. For example, precious metals and/or radioisotopes may be formed through such bombardment. Conventionally, particle accelerators or specially-designed, non-commercial test reactors are used to achieve such bombardment and produce desired isotopes in relatively small amounts.

Radioisotopes have a variety of medical and industrial applications stemming from their ability to emit discreet amounts and types of ionizing radiation and form useful daughter products. For example, radioisotopes are useful in cancer-related therapy, medical imaging and labeling technology, cancer and other disease diagnosis, and medical sterilization.

Radioisotopes having half-lives on the order of days or hours are conventionally produced by bombarding stable parent isotopes in accelerators or low-power, non-electricity-generating reactors. These accelerators or reactors are on-site at medical or industrial facilities or at nearby production facilities. Especially short-lived radioisotopes must be quickly transported due to the relatively quick decay time and the exact amounts of radioisotopes needed in particular applications. Further, on-site production of radioisotopes generally requires cumbersome and expensive irradiation and extraction equipment, which may be cost-, space-, and/or safety-prohibitive at end-use facilities.

EP 2 093 773 A3 relates to apparatus and methods for production of radioisotopes in nuclear reactor instrumentation tubes. US 2011/0051875 A1 relates to a cable driven isotope delivery system.

### SUMMARY

Aspects of the invention provide a system and method as defined in claims 1 and 12.

Example embodiments include systems for moving and managing objects through a nuclear reactor, where access may be limited. For example, irradiation targets, instrumentation, and/or other objects can be moved into, and maintained in, one or even several instrumentation tubes in a reactor during operation. Example systems include a traversable path connecting the instrumentation tube(s) and a retainer along such paths to control movement of irradiation targets or other objects traversing the path. Example embodiment retainers include any type of movement restrictor, including a retention mechanism that can limit or prevent movement along the path in a discriminatory fashion, to allow passage of only desired objects. For example, an example embodiment retention assembly includes a restriction fork that can move into and squeeze an area available for passage, preventing objects larger than the fork tines' separation from passing. The fork tines can have variable separation, such that when the fork is retracted/extended the amount of area available for passage, and thus objects moveable through the path, changes as desired. Irradiation targets can be blocked or held in an instrumentation tube for irradiation while a driving plunger that pushed the targets is retractable through the fork. Example retainers can be compact and/or self-contained with their own motors and actuation/communication circuitry so as to be placeable in space-limited areas within nuclear power plants, including at instrumentation tube flanges. Example embodiments may further include position detectors to appropriately move and hold objects within the paths at desired, such as at irradiation positions for the creation of desired isotopes or blocking or reducing movement at other sensitive positions. Example embodiment retainers are useable in a variety of access-restricted and space-limited areas within any facility, and with a variety of different systems, including irradiation target delivery / harvesting / driving systems, instrumentation systems, and/or multiple-use systems, that can remotely and/or automatically move objects through the areas without direct user interaction.

### BRIEF DESCRIPTIONS OF THE DRAWINGS

Example embodiments will become more apparent by describing, in detail, the attached drawings, wherein like elements are represented by like reference numerals, which are given by way of illustration only and thus do not limit the terms which they depict.
FIG. 1 is an illustration of a conventional commercial nuclear reactor.
FIG. 2 is an illustration of an example embodiment irradiation target system.
FIG. 3 is an illustration of an example embodiment retention assembly.
FIG. 4 is an illustration of an example embodiment restricting fork.
FIG. 5 is an illustration of an example embodiment retention assembly.

### DETAILED DESCRIPTION

This is a patent document, and general broad rules of construction should be applied when reading and understanding it. Any specific structural and functional details disclosed herein are merely for purposes of describing how to make and use example embodiments. Several different embodiments not specifically disclosed herein fall within the scope of the appended claims; as such, the claims may be embodied in many alternate forms and should not be construed as limited to only example embodiments set forth herein.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to in a spatial or physical relationship, as being "connected," "coupled," "mated," "attached," or "fixed," to another element, it can be directly connected or coupled to the other element or intervening elements may be present. In contrast, when an element is referred to as being "directly connected" or "directly coupled" to another element, for example, there are no intervening elements present. Other words used to describe the relationship between elements should be interpreted in a like fashion (e.g., "between" versus "directly between", "adjacent" versus "directly adjacent", etc.). Similarly, a term such as "communicatively connected" includes all variations of information exchange routes between two devices, including intermediary devices, networks, etc., connected wirelessly or not.

As used herein, the singular forms "a", "an" and "the" are intended to include both the singular and plural forms, unless the language explicitly indicates otherwise with words like "only," "single," and/or "one." It will be further understood that terms like "have," "having," "comprises," "comprising," "includes," and/or "including," when used herein, specify the presence of stated features, steps, operations, elements, ideas, and/or components, but do not themselves preclude the presence or addition of one or more other features, steps, operations, elements, components, ideas, and/or groups thereof.

It should also be noted that the structures and operations discussed below may occur out of the order described and/or noted in the figures. For example, two operations and/or figures shown in succession may in fact be executed concurrently or may sometimes be executed in the reverse order, depending upon the functionality/acts involved. Similarly, individual operations within example methods described below may be executed repetitively, individually or sequentially, so as to provide looping or other series of operations aside from the single operations described below. It should be presumed that any embodiment having features and functionality described below, in any workable combination, falls within the scope of example embodiments.

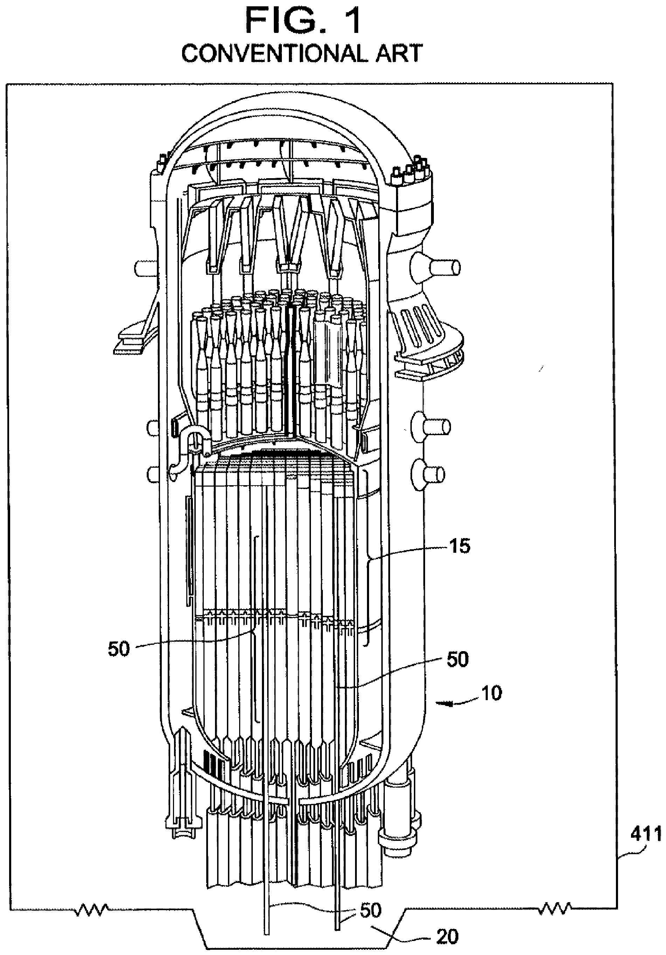

FIG. 1 is an illustration of a conventional nuclear reactor pressure vessel 10 usable with example embodiments and example methods. Reactor pressure vessel 10 may be, for example, a 100+ MWe commercial light water nuclear reactor conventionally used for electricity generation throughout the world. Reactor pressure vessel 10 is conventionally contained within an access barrier 411 that serves to contain radioactivity in the case of an accident and prevent access to reactor 10 during operation of the reactor 10. As defined herein, an access barrier is any structure that prevents human access to an area during operation of the nuclear reactor due to safety or operational hazards such as radiation. As such, access barrier 411 may be a containment building sealed and inaccessible during reactor operation, a drywell wall surrounding an area around the reactor, a reactor shield wall, a human movement barrier preventing access to instrumentation tube 50, etc.

A cavity below the reactor vessel 10, known as a drywell 20, serves to house equipment servicing the vessel such as pumps, drains, instrumentation tubes, and/or control rod drives. As shown in FIG. 1 and as defined herein, at least one instrumentation tube 50 extends into the vessel 10 and near, into, or through core 15 containing nuclear fuel and relatively high levels of neutron flux and other radiation during operation of the core 15. As existing in conventional nuclear power reactors and as defined herein, instrumentation tubes 50 are enclosed within vessel 10 and open outside of vessel 10, permitting spatial access to positions proximate to core 15 from outside vessel 10 while still being physically separated from innards of the reactor and core by instrumentation tube 50. Instrumentation tubes 50 may be generally cylindrical and may widen with height of the vessel 10; however, other instrumentation tube geometries may be encountered in the industry. An instrumentation tube 50 may have an inner diameter of about 25.4 to 12.7 mm (1-0.5 inch), for example.

Instrumentation tubes 50 may terminate below the reactor vessel 10 in the drywell 20. Conventionally, instrumentation tubes 50 may permit neutron detectors, and other types of detectors, to be inserted therein through an opening at a lower end in the drywell 20. These detectors may extend up through instrumentation tubes 50 to monitor conditions in the core 15. Examples of conventional monitor types include wide range detectors (WRNM), source range monitors (SRM), intermediate range monitors (IRM), and traversing Incore probes (TIP). Access to the instrumentation tubes 50 and any monitoring devices inserted therein is conventionally restricted to operational outages due to containment and radiation hazards.

Although vessel 10 is illustrated with components commonly found in a commercial Boiling Water Reactor, example embodiments and methods are useable with several different types of reactors having instrumentation tubes 50 or other access tubes that extend into the reactor. For example, Pressurized Water Reactors, Heavy-Water Reactors, Graphite-Moderated Reactors, etc. having a power rating from below 100 Megawatts-electric to several Gigawatts-electric and having instrumentation tubes at several different positions from those shown in FIG. 1 may be useable with example embodiments and methods. As such, instrumentation tubes useable in example methods may be at any geometry about the core that allows enclosed access to the flux of the nuclear core of various types of reactors.

Applicants have recognized that instrumentation tubes 50 may be useable to relatively quickly and constantly generate short-term radioisotopes on a large-scale basis without interfering with an operating or refueling core 15. Applicants have further recognized a need to generate short-term radioisotopes and remove them from within access barrier 411 quickly, without having to shut down an operating nuclear reactor to access an area within access barrier 411. Example methods include inserting irradiation targets into instrumentation tubes 50 and exposing the irradiation targets to the core 15 while operating or producing radiation, thereby exposing the irradiation targets to the neutron flux and other radiation commonly encountered in the operating core 15. The core flux over time converts a substantial portion of the irradiation targets to a useful mass of radioisotope, including short-term radioisotopes useable in medical applications. Irradiation targets may then be withdrawn from the instrumentation tubes 50, even during ongoing operation of the core 15, and removed for medical and/or industrial use.

Applicants have further recognized a need for a maximized amount of radioisotope production within instrumentation tubes 50, but also identified that such need is limited by relatively few and sensitive pathways through access barrier 411 during operation. Such pathways through access barrier 411 may require compatibility with existing instrumentation, including TIP probes that are inserted into instrumentation tubes 50 during TIP runs. Example embodiments and methods address this problem by permitting irradiation targets 250 to be inserted into and removed from instrumentation tubes 50 from a first access point, while reliably permitting TIP tubes to be inserted and removed at other instances from the instrumentation tubes 50 from a second access point. In this way, multiple operations and use of instrumentation tubes 50 can be safely achieved in an access-sensitive environment such as a nuclear power plant.

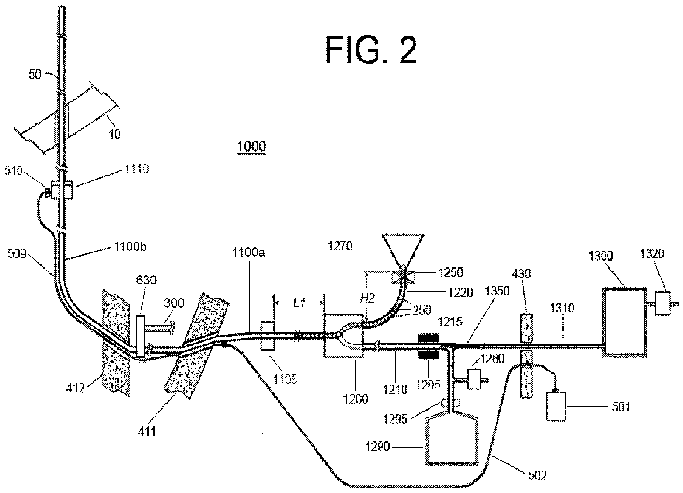

FIG. 2 is a schematic drawing of an example embodiment irradiation target delivery and retrieval system 1000 having a penetration pathway, a loading/offloading system, and a drive system. FIG. 2 illustrates various components of example system 1000 in a loading configuration, parts of which are also described in co-pending application 13/339,345, titled "Systems and Methods for Processing Irradiation Targets Through a Nuclear Reactor," filed December 28, 2011. As shown in FIG. 2, example embodiment irradiation target delivery and retrieval system 1000 may include or use one or more elements to facilitate irradiation target loading, irradiation, and harvesting in a timely, automatic, and/or consumption-enhancing manner. System 1000 includes a penetration pathway that provides a path from outside access barrier 411 to instrumentation tube 50 for one or more irradiation targets, a loading/offloading system that permits new irradiation targets to be inserted and irradiated targets to be harvested outside access barrier 411, and a drive system that moves irradiation targets between instrumentation tube 50 and loading/offloading system in example embodiment system 1000.

A penetration pathway in example embodiment system 1000 provides a reliable path of travel for irradiation targets 250 between an accessible location, such as an offloading or loading area outside access barrier 411 into one or more instrumentation tubes 50, so irradiation targets 250 can move within the pathway to a position in or near an operating nuclear core 15 for irradiation. Example pathways can include many delivery mechanisms used alone or in combination, including tubing, frames, wires, chains, conveyors, etc. in example embodiment system 1000 to provide a transit path for an irradiation target between an accessible location and an operating nuclear core. As a specific example shown in FIG. 2, a penetration pathway may include penetration tubing 1100, including 1100a and 1100b, running between, either in portions or continuously, a loading junction 1200 and instrumentation tube 50 in a nuclear reactor.

Penetration tubing 1100 may be flexible or rigid and sized to appropriately permit irradiation targets 250 to enter into and/or through penetration tubing 1100 and navigate various structures and penetrations in and within access barrier 411. Penetration tubing 1100 may be continuously sealed or include openings, such as at connecting junctions. Penetration tubing 1100 may junction with other tubes and/or structures and/or include interruptions. One possible advantage of penetration tubing 1100 being sealed and securely mating at junctures and/or with any terminal/originating points is that penetration tubing 1100 better maintains pneumatic pressure that can be used for target withdrawal, and also may provide additional containment for irradiation targets 250 and any products (gas, fluid, solid, particulate, etc.) formed as irradiation products in example embodiment system 1000.

Penetration tubing 1100 may be fabricated of a material that maintains its physical characteristics in an operating nuclear reactor environment and does not significantly react with or entrain materials from irradiation targets 250 coming into contact therewith, including, for example, aluminum, stainless steel, carbon steel, nickel alloys, PVC, PFA, rubber, etc. Penetration tubing 1100 may be cylindrical or any other shape that permits irradiation targets 250 to enter into and/or pass through penetration tubing 1100. For example, penetration tubing 1100 may have a generally circular cross section with a 12.7 mm (0.5-inch) diameter and smooth interior surface that permits spherical irradiation target 250 to roll within penetration tubing 1100. One potential advantage of using such an example penetration tubing 1100 may be roughly matching diameters and geometries with instrumentation tubes 50 for consistent irradiation target movement therein; however, alternate geometries, shapes, and sizes for penetration tubing 1100, or any other penetration pathway used in example embodiments, including those that limit movement, may be desirable, advantageous, and used.

Penetration tubing 1100 used in example embodiment system 1000 provides a route from an origin at loading junction 1200, where irradiation targets may enter/exit penetration tubing 1100 outside of access barrier 411. As shown in FIG. 2, for example, penetration tubing 1100 leads irradiation targets 250 from loading junction 1200 to access barrier 411, which may be, for example, a steel-lined reinforced concrete containment wall or drywell wall or any other access restriction in conventional nuclear power stations.

Penetration pathways usable in example embodiment system 1000 provide a route through access barrier 411 and to reactor vessel 10 where irradiation targets 250 may enter an instrumentation tube 50. For example, as shown in FIG. 2, penetration tubing 1100 penetrates access barrier 411 and extends to instrumentation tubes 50. Penetration tubing 1100 may pass through an existing penetration in access barrier 411, such as an existing TIP tube penetration, or may use a new penetration created for penetration tubing 1100. Penetration tubing 1100 negotiates or passes through any other objects inside of access barrier 411 before reaching instrumentation tube 50.

An annular reactor pedestal 412 may be present in a drywell 20 beneath reactor 10, and penetration tubing 1100 is shown in FIG. 2 passing through a penetration in pedestal 412. It is understood that penetration pathways may follow any number of different courses and negotiate different obstacles in different reactor designs aside from the specific example path shown with penetration tubing 1100 in FIG. 2. Similarly, penetration pathways need not be consistent or uniform; for example, penetration tubing 1100 may terminate on either side of, and be connected to, a penetration in pedestal 412 to permit irradiation targets 250 to pass through the penetration between penetration tubing 1100.

Penetration pathways useable in example embodiment system 1000 may terminate at or within an instrumentation tube 50. As shown in FIG. 2, penetration tubing 1100 terminates at a flange 1110 at a base of instrumentation tube 50, permitting irradiation targets 250 to pass from penetration tubing 1100 into instrumentation tube 50. Similarly, penetration tubing 1100 may join with an indexer that provides access to several instrumentation tubes 50 from a single penetration through reactor wall 411 and/or pedestal 412. Such a system is described in co-pending application 13/477,244 titled "Systems and Methods for Processing Irradiation Targets Through Multiple Instrumentation Tubes in a Nuclear Reactor," filed May 22, 2012.

Penetration pathways useable in example embodiments may be pre-existing in part or in whole and/or installed during access to containment areas and/or restricted access areas in a nuclear power plant, such as during a pre-planned outage. For example, penetration tubing 1100 may be installed in access barrier 411 during an outage, with penetration tubing 1100 being passed through penetrations in access barrier 411 and pedestal 412, moved and secured in an area within access barrier 411 and a drywell space 20 under reactor 10, and secured to flange 1110. Portions of penetration tubing 1100 extending outside access barrier 411 may be installed at loading junction 1200 at any time. Penetration tubing 1100 may be secured at various points inside access barrier 411 and/or divert around existing equipment to minimize congestion or clutter in a drywell 20 or other space bounded by access barrier 411 while preserving a traversable path for irradiation targets 250 to and from instrumentation tube 50. Again, other penetration pathways, including wire guides, meshes, compartments, bored tunnels, etc. are useable in example embodiments to provide a path from outside an access-restricted area such as containment to an instrumentation tube of an operating nuclear reactor.

System 1000 may be dual purpose throughout and equally used with a TIP drive or other instrumentation and reactor components. Or system 100 may be exclusively dedicated to isotope production and harvesting with its own driving mechanism, pathways, reservoirs, etc. and excluding use with other instrumentation or a TIP drive. Or system 1000 may be exclusive in some part and shared in others. For example, outside of pedestal 412 and/or drywell 20, example embodiment system 1000 may be dedicated to irradiation target production and harvesting. Within pedestal 412 and drywell 20, space may be at a premium and installation of new dedicated components and/or movement of other components may be undesirable, such that example system 1000 may use and share pathways with conventional TIP drives and instrumentation. A shared functionality system is described in co-pending application "Systems and Methods for Managing Shared-Path Instrumentation and Irradiation Targets in a Nuclear Reactor" by Heinold et al., filed herewith, having attorney docket 5.0019.1 (24IG259237).

Because example embodiment systems may be dual-use and/or because it may be desirable to retain irradiation targets 250 within instrumentation tubes without requiring constant fill or blockage of one or more penetration pathways, example embodiment systems can include a holding mechanism at flanges 1110 to preserve irradiation targets 250 within instrumentation tubes 50 for desired amounts of time and/or at desired axial levels.

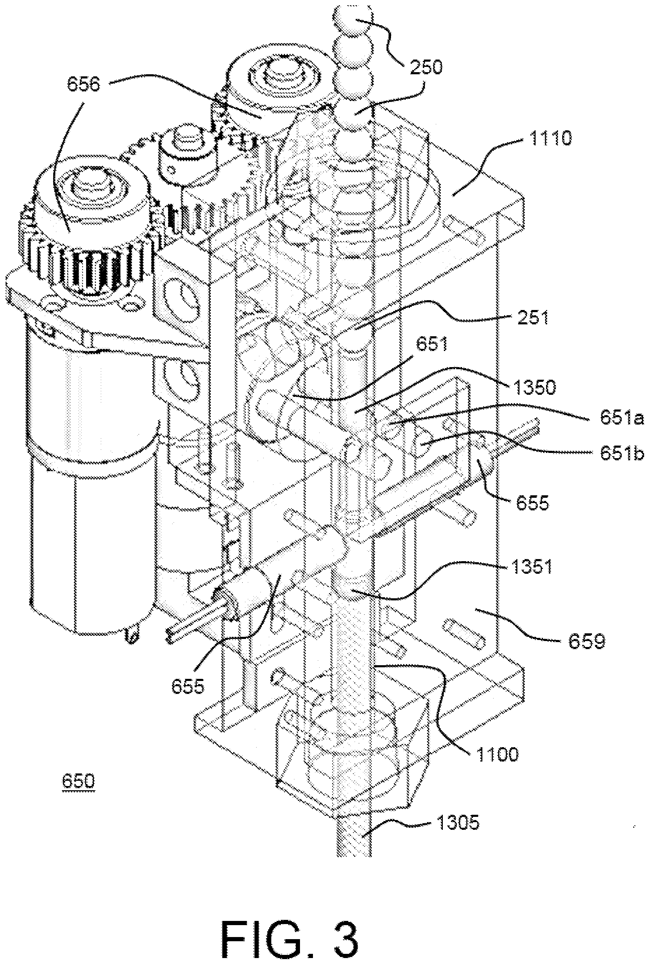

FIG. 3 is an illustration of an example embodiment retention assembly 650 useable in example embodiment systems. As shown in FIG. 3, example embodiment retention assembly 650 may be installed about a flange 1110 of an instrumentation tube 50 (FIG. 2). For example, retention assembly may include a frame 659 that provides an air-tight enclosure attached directly to flange 1110 and an associated instrumentation tube. A penetration pathway, 1100 may extend completely or partially through example embodiment retention assembly 650, and irradiation targets 250 may travel therein. Example embodiment retention assembly 650 may include a restricting fork 651 or other retaining structure that blocks movement of irradiation targets 250 through penetrations pathway 1100 and/or into/out from instrumentation tubes. As shown in FIG. 3, restricting fork 651 is moveable between at least two positions 651a and 651b, selectively restricting irradiation target 250 movement.

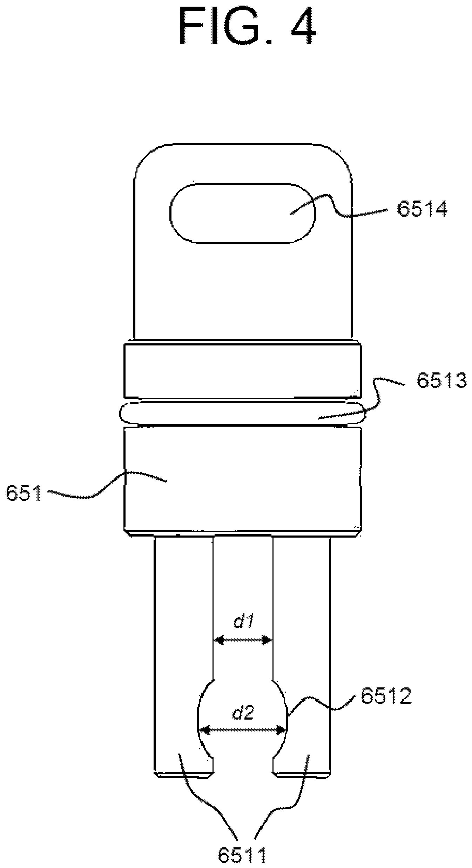

FIG. 4 is an illustration of an example embodiment restricting fork 651. As shown in FIG. 4, restricting fork 651 includes two prongs 6511 that are shaped and sized to pass around opposite sides of a penetration pathway in which irradiation targets pass. Prongs 6511 include variable separation so as to provide variable blockage to irradiation targets passing or blocked therebetween. For example, each prong 6511 may include a matching interior surface divot 6512 to provide a greater separation *d2* and more passage room between prongs 6511 at interior surface divots 6512. At other points, prongs 6511 may be spaced with lesser separation *d1* that prevents irradiation targets of a particular size from passing between prongs 6511. Lesser separation *d1* may still permit movement of other features, such as plunger 1350 (FIG. 3) to pass therebetwen, thereby permitting discriminatory movement within penetration pathway 1100 (FIG. 3). It is understood that while example embodiment retention assembly 650 may use a restricting fork 651 to provide discriminatory hold and pass functionality to penetration pathways, other devices may similarly achieve this goal in example embodiments, including a choke valve, magnets, retractable blocking post, tube seal, etc.

Divots 6512 may be placed at appropriate transverse positions to intersect penetration pathways 1100 (FIG. 3) only at a retracted position 651a (FIG. 3). As such, in retracted position 651a (FIG. 3), restricting fork 651 may permit irradiation targets 250 (FIG. 3) to pass through prongs 6511, while in an extended position 651b (FIG. 3), restricting fork 651 may restrict or crimp penetration pathway 1100 (FIG. 3) to prevent irradiation targets 250 (FIG. 3) from passing therebetween.

Example embodiment restricting fork 651 may further include a driving adapter 6514 that attaches to a piston or other reliable driving mechanism to move fork 651 into desired positions. For example, driving adapter 6514 can be a simple ring that engages with a piston to move fork 651 between positions 651a and 651b (FIG. 3). Example embodiment restricting form 651 may further include an O-ring seal 6515 that seals an interior of frame 659 of example embodiment retention assembly 650. In this way, retention assembly 650 may preserve an air-tight seal about flange 1110 and ensure any pneumatic driving fluid, such as that provided through pneumatic lines 510 and 509, is directed into penetration pathways to move irradiation targets.

As shown in FIG. 3, example embodiment retention assembly 650 further includes a driving force to move restricting fork 651 to desired positions. For example, one or more motors 656 can be connected to a crankshaft and piston that drives restricting fork 651 back and forth perpendicular to penetration pathway 1100. Such motors 651 can provide high reliability of positioning and movement of restricting fork 651 as well as statuses and commands to remote users. Motors 651 may provide functionality and be configured similarly to motors, driveshafts, and pistons of the incorporated Heinhold co-pending application. Of course, any other co-located or remote driving devices may be used to move restricting fork 651 into and between desired positions, including pneumatic air sources, fail-safe solenoids, etc.

Restricting fork 651 can move relative to penetration pathway 1100 holding irradiation targets 250 and plunger 1350, from positions 651a to 651b and vice versa, depending on a desired restriction and passability of penetration pathway 1100. Plunger 1350 in example embodiment driving systems is sized smaller than irradiation targets 250 in order to freely pass between restricting fork 651 in any position, whereas irradiation targets 250 may not. For example, restricting fork 651 may have prongs 6511 spaced *d1* apart, where *d1* corresponds to a length greater than a diameter of plunger 1350. Irradiation targets 250 in example systems may be sized larger than *d1* but smaller than *d2* created by surface divots 6512, such that irradiation targets 250 will be moveable in penetration pathway 1100 only when restring fork 651 is in pass position 651a.

In the example of FIG. 3, irradiation targets 250 may be driven into and through example embodiment retention assembly 650 and into an instrumentation tube. Retention fork 651 may be in pass position 651a during this driving, such that irradiation targets 250 and plunger 1350 can pass through retention fork 651 in penetration pathway 1100 and into an instrumentation tube, without fork 651 restricting such insertion. Once irradiation targets 250 are above restricting fork 651, motors 656 can drive retention fork 651 forward into hold position 651b, where penetration pathway 1100 is restricted. For example, penetration pathway may be a flexible plastic that restricts when contacted by restricting fork 651 and/or penetration pathway 1100 may include a gap that allows prongs of restricting fork 651 to selectively block irradiation targets 250 without permitting their escape from penetration pathway 1100.

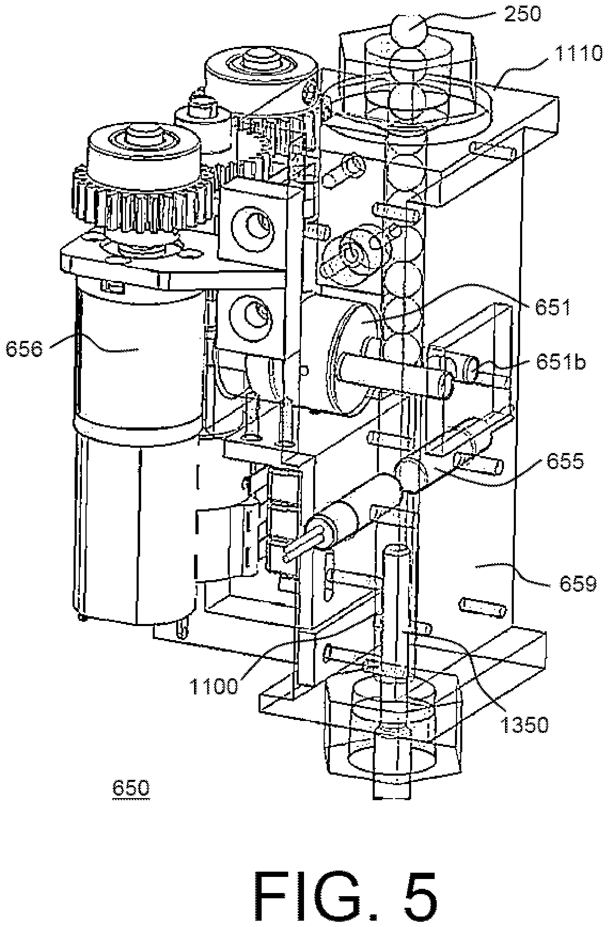

As shown in FIG. 5, plunger 1350 may be withdrawn from irradiation targets 250 while restricting fork 651 maintains irradiation targets 250 in static desired axial positions for irradiation. Plunger 1350 may be entirely withdrawn from retention assembly 650 and penetration pathway 1100, allowing their use with other systems while irradiation targets 250 are maintained in an instrumentation tube for irradiation. Fork 651 and motors 656 may be configured with sufficient strength and power to hold several pounds of irradiation targets 250 aligned axially within an instrumentation tube and bearing on prongs of fork 651, while also permitting movement of restricting fork 651 between desired positions. One or more positioning irradiation targets 251 may be used to prop up irradiation targets 250 to desired axial positions within an instrumentation tube, and/or to demarcate where a chain of harvestable irradiation targets 250 ends/begins. When irradiation is complete, or at any other point when evacuation of an instrumentation tube is desired, motors 656 can drive fork 651 back into pass position 651a, and irradiation targets 250 may descend into penetration pathway 1100 via gravity, with or without the aid of plunger 1350.

Example embodiment retention assembly 650 may further include a position detector that detects whether irradiation targets 250 and/or plunger 1350 are in a desired position for movement of restricting fork 651. As shown in FIGS. 3 and 5, example embodiment retention assembly 650 may include one or more reed switches 655 positioned about penetration pathway 1100 that detect a presence of a magnetic member therein and report a signal to an operator and/or motor 656 to indicate such detection. Reed switches 655 may be configured to detect presence of a magnet 1351 positioned within plunger 1350 and/or TIP cable 1305, or a presence of a ferromagnetic positioning irradiation target 251, for example.

Based on the position of these magnetic features, reed switches 655 may trip only when irradiation targets 250 are in desired positions for fork 651 to move between positions 651a and 651b. For example, a magnet 1351 in plunger 1350 may be configured and positioned such that it trips reed switches 655 only at a location where plunger 1350 has driven all irradiation targets 250 beyond restricting fork 651, as shown in FIG. 3. Upon trip, reed switches 655 may actuate motors 656 to move restriction fork 651 from pass position 651a to hold position 651b, allowing plunger 1350 to be withdrawn while retaining irradiation targets against prongs of fork 651. Still further, reed switches 655 may detect several positions of magnet 1351 based on magnetic field strength, such as an approach of magnet 1351 toward reed switches 655, and report such positioning and/or approach to a user, motors 656, and or other automated components. In this way, TIP cable 1305, plunger 1350, and/or any TIP drive pushing the same may be slowed when such an approach is detected, permitting greater positioning accuracy, magnetic detection, and/or preventing overshoot or inertial lifting of irradiation targets 250 and plunger 1350 beyond desired positions.

Reed switches 655 and/or motors 656 may be self-powered and -contained as a relatively small unit in example embodiment retention assembly 650 about flange 1110, so as to permit installation of several example embodiments at several instrumentation tubes, if desired, without requiring excess wiring or power. Still further, a shared wiring system and/or wireless communications units may communicatively connect example embodiment retention assemblies 650 to a user or other manual or automatic devices for coordination within an example embodiment system 1000 to irradiate and harvest desired isotopes. Example embodiment retention assembly 650 may reliably provide selective movability to irradiation targets 250 through penetration pathway 1100, and, as such, is fabricated of materials that are resilient in operating nuclear power plant conditions. For example, retention assembly 650 may be useable in the systems described in application 13/477,244 at flange 1110 to replace and/or be used with various mechanisms described therein for controlling irradiation target movement.

Example embodiments and methods thus being described, it will be appreciated by one skilled in the art that example embodiments may be varied and substituted through routine experimentation while still falling within the scope of the following claims. For example, the locations of retention devices that allow movement or holding of irradiation targets or other system components are not limited to the specific systems shown and described in the figures - other specific devices and systems for reliably preserving irradiation targets in an instrumentation tube are equally useable as example embodiments and fall within the scope of the claims. Furthermore, it is understood that example systems and methods are useable in any type of nuclear plant with access barriers that prevent unlimited access to the reactor, including known light water reactor designs, graphite-moderated reactors, and/or molten salt reactors, as well as any other nuclear plant design. Such variations are not to be regarded as departure from the scope of the following claims.

## Claims

1. A system (1000) for delivering and retrieving irradiation targets (250) through a nuclear reactor (10), the system comprising:
a loading / offloading system providing irradiation targets (250), wherein the loading / offloading system is outside of an access barrier (411) of the nuclear reactor (10);
a penetration pathway (1100) extending through the access barrier (411) and connecting the loading / offloading system to one of a plurality of instrumentation tubes extending into the nuclear reactor inside the access barrier (411), wherein the penetration pathway is traversable by the irradiation targets (250) to the instrumentation tube (50);
a retention mechanism (650) coupled to the penetration pathway (1100) at a flange (1110) of the instrumentation tube (50), wherein the retention mechanism is configured to hold the irradiation targets (250) within the instrumentation tube (50); and
a drive system configured to move the irradiation targets (250) between the instrumentation tube (50) and the loading / offloading system, **characterised by** the drive system comprising a plunger (1350) operable to drive the irradiation targets into the instrumentation tube (50), the plunger sized to move through the retention mechanism (650) and be retractable through the retention mechanism (650), wherein the irradiation targets are sized to be blocked by the retention mechanism (650).

2. The system (1000) of claim 1, wherein the retention mechanism (650) is a retention assembly including a restrictor (651) on the penetration pathway (1100), wherein the restrictor is configured to selectively block passage area within the penetration pathway.

3. The system (1000) of claim 2, wherein the restrictor (651) is a restriction fork having at least two prongs that extend around opposite sides of the penetration pathway (1100).

4. The system (1000) of claim 3, wherein the prongs of the restriction fork (651) are spaced apart less than a width of the irradiation targets (250), and wherein the prongs include matching and facing surface divots (6512) spaced apart greater than a width of the irradiation targets.

5. The system (1000) of claim 4, wherein the restriction fork (651) blocks passage of the irradiation targets (250) through the penetration pathway (1100) with the prongs, and wherein the restriction fork allows passage of the irradiation targets through the penetration pathway when moved such that the surface divots align with the penetration pathway.

6. The system (1000) of claim 4, wherein the prongs of the restriction fork (651) are spaced apart more than a width of the plunger (1350).

7. The system (1000) of claim 2, wherein the retention assembly (650) further includes at least one motor connected to the restrictor (651), wherein the motor drives the restrictor to block or unblock passage area within the penetration pathway (1100).

8. The system (1000) of claim 1, wherein the retention mechanism (650) includes a position detector configured to detect a position of the irradiation targets in the penetration pathway.

9. The system (1000) of claim 8, wherein the position detector is at least one reed switch (655).

10. The system (1000) of claim 9, further comprising:
a drive system configured to drive the irradiation targets (250) in the penetration pathway (1100) and into the instrumentation tube (50), wherein the plunger is a magnetized plunger (1350) having a width smaller than the irradiation targets (250) that pass through the retention mechanism (650).

11. The system (1000) of claim 1, wherein the system includes a plurality of the penetration pathways (1100) connecting the loading / offloading system to a plurality of the instrumentation tubes (50), and a plurality of the retention mechanisms (650) each coupled to one of the penetration pathways.

12. A method of processing irradiation targets (250) through a nuclear reactor to generate isotope products, the method comprising:
creating a penetration pathway (1100) from outside an access barrier (411) of the nuclear reactor to an instrumentation tube (50) of the nuclear reactor, the penetration pathway extending through the access barrier (411);
moving a plurality of irradiation targets (250) into the instrumentation tube (50) through the penetration pathway (1100);
engaging a retention mechanism (650) in the penetration pathway (1100) to maintain the irradiation targets (250) in the instrumentation tube (50), the retention mechanism (650) coupled to the penetration pathway (1100) at a flange (1110) of the instrumentation tube (50); and
evacuating the penetration pathway (1100) while the irradiation targets (250) are maintained in the instrumentation tube (50); **characterised in that** the moving the irradiation targets (250) into the instrumentation tube (50) comprises driving the irradiation targets with a plunger (1350) in the penetration pathway (1100), and wherein the plunger is sized to move through the engaged retention mechanism (650) in the penetration pathway, and wherein the irradiation targets are sized to be blocked by the engaged retention mechanism (650).

13. The method of claim 12, wherein the engaging the retention mechanism (650) includes extending a retention fork (651) to block passage of the irradiation targets through the penetration pathway (1100) with prongs of the fork.

14. The method of claim 12, further comprising:
detecting a position of the irradiation targets (250) in the penetration pathway (1100) inside of the access barrier (411), wherein the moving and the engaging are based on the detecting.

## Patentansprüche

1. System (1000) zum Liefern und Beschaffen von Bestrahlungszielen (250) durch einen Nuklearreaktor (10), das System umfassend:
ein Ladungs-/Entladungssystem, das Bestrahlungsziele (250) bereitstellt, wobei das Ladungs-/Entladungssystem außerhalb einer Zugangsbarriere (411) des Nuklearreaktors (10) ist;
ein Durchdringungspfad (1100), der sich durch die Zugangsbarriere (411) erstreckt und das Ladungs-/Entladungssystem mit einer von mehreren Instrumentationsröhren verbindet, die sich innerhalb der Zugangsbarriere (411) in den Nuklearreaktor erstrecken, wobei der Durchdringungspfad von den Bestrahlungszielen (250) zur Instrumentationsröhre (50) passierbar ist;
einen Rückhaltemechanismus (650), der mit dem Durchdringungspfad (1100) bei einem Flansch (1110) der Instrumentationsröhre (50) gekoppelt ist, wobei der Rückhaltemechanismus konfiguriert ist, die Bestrahlungsziele (250) innerhalb der Instrumentationsröhre (50) zu halten; und
ein Antriebssystem, das konfiguriert ist die Bestrahlungsziele (250) zwischen der Instrumentationsröhre (50) und dem Ladungs-/Entladungssystem zu bewegen, **dadurch gekennzeichnet, dass** das Antriebssystem einen Kolben (1350) umfasst, der betriebsfähig ist, die Bestrahlungsziele in die Instrumentationsröhre (50) zu treiben, wobei der Kolben dimensioniert ist, sich durch den Rückhaltemechanismus (650) hindurch zu bewegen und durch den Rückhaltemechanismus (650) hindurch einziehbar zu sein, wobei die Bestrahlungsziele dimensioniert sind, durch den Rückhaltemechanismus (650) blockiert zu sein.

2. System (1000) nach Anspruch 1, wobei der Rückhaltemechanismus (650) eine Rückhalteanordnung ist, die einen Begrenzer (651) auf dem Durchdringungspfad (1100) enthält, wobei der Begrenzer konfiguriert ist, selektiv einen Durchgangsbereich innerhalb des Durchdringungspfads zu blockieren.

3. System (1000) nach Anspruch 2, wobei der Begrenzer (651) eine Begrenzergabel mit zumindest zwei Zacken ist, die sich um entgegengesetzte Seiten des Durchdringungspfads (1100) erstrecken.

4. System (1000) nach Anspruch 3, wobei die Zacken der Begrenzungsgabel (651) weniger beabstandet sind als eine Breite der Bestrahlungsziele (250) und wobei die Zacken übereinstimmende und zueinander zeigende Oberflächenvertiefungen (6512) enthalten, die weiter beabstandet sind als eine Breite der Bestrahlungsziele.

5. System (1000) nach Anspruch 4, wobei die Begrenzergabel (651) einen Durchgang der Bestrahlungsziele (250) durch den Durchdringungspfad (1100) mit den Zacken blockiert und wobei die Begrenzergabel einen Durchgang der Bestrahlungsziele durch den Durchdringungspfad erlaubt, wenn so bewegt, dass sich die Oberflächenvertiefungen mit dem Durchdringungspfad ausrichten.

6. System (1000) nach Anspruch 4, wobei die Zacken der Begrenzergabel (651) weiter als eine Breite des Kolbens (1350) beabstandet sind.

7. System (1000) nach Anspruch 2, wobei die Rückhalteanordnung (650) ferner zumindest einen Motor enthält, der mit dem Begrenzer (651) verbunden ist, wobei der Motor den Begrenzer antreibt, einen Durchgangsbereich innerhalb des Durchdringungspfads (1100) zu blockieren oder freizugeben.

8. System (1000) nach Anspruch 1, wobei der Rückhaltemechanismus (650) einen Positionsdetektor enthält, der konfiguriert ist, eine Position der Bestrahlungsziele im Durchdringungspfad zu erfassen.

9. System (1000) nach Anspruch 8, wobei der Positionsdetektor zumindest ein Reedschalter (655) ist.

10. System (1000) nach Anspruch 9, ferner umfassend:
ein Antriebssystem, das konfiguriert ist, die Bestrahlungsziele (250) im Durchdringungspfad (1100) und in die Instrumentationsröhre (50) zu treiben, wobei der Kolben ein magnetisierter Kolben (1350) mit einer Breite kleiner als die Bestrahlungsziele (250) ist, die durch den Rückhaltemechanismus (650) durchgehen.

11. System (1000) nach Anspruch 1, wobei das System mehrere Durchdringungspfade (1100), die das Ladungs-/Entladungssystem mit mehreren der Instrumentationsröhren (50) verbinden, und mehrere der Rückhaltemechanismen (650), von denen jeder mit einem der Durchdringungspfade gekoppelt ist, enthält.

12. Verfahren zur Verarbeitung von Bestrahlungszielen (250) durch einen Nuklearreaktor, um isotope Produkte zu erzeugen, das Verfahren umfassend:
Erzeugen eines Durchdringungspfads (1100) von außerhalb einer Zugangsbarriere (411) des Nuklearreaktors zu einer Instrumentationsröhre (50) des Nuklearreaktors, wobei sich der Durchdringungspfad durch die Zugangsbarriere (411) erstreckt;
Bewegen mehrerer Bestrahlungsziele (250) in die Instrumentationsröhre (50) durch den Durchdringungspfad (1100);
Einrasten eines Rückhaltemechanismus (650) im Durchdringungspfad (1100), um die Bestrahlungsziele (250) in der Instrumentationsröhre (50) zu halten, wobei der Rückhaltemechanismus (650) mit dem Durchdringungspfad (1100) bei einem Flansch (1110) der Instrumentationsröhre (50) gekoppelt ist; und
Evakuieren des Durchdringungspfads (1100), während die Bestrahlungsziele (250) in der Instrumentationsröhre (50) gehalten werden;
**dadurch gekennzeichnet, dass**
das Bewegen der Bestrahlungsziele (250) in der Instrumentationsröhre (50) ein Antreiben der Bestrahlungsziele mit einem Kolben (1350) im Durchdringungspfad (1100) umfasst und wobei der Kolben so dimensioniert ist, dass er sich durch den eingerasteten Rückhaltemechanismus (650) im Durchdringungspfad hindurch bewegt, und wobei die Bestrahlungsziele so dimensioniert sind, dass sie durch den eingerasteten Rückhaltemechanismus (650) blockiert sind.

13. Verfahren nach Anspruch 12, wobei das Einrasten des Rückhaltemechanismus (650) ein Ausfahren einer Rückhaltegabel (651) enthält, um einen Durchgang der Bestrahlungsziele durch den Durchdringungspfad (1100) mit Zacken der Gabel zu blockieren.

14. Verfahren nach Anspruch 12, ferner umfassend:
Detektieren einer Position der Bestrahlungsziele (250) im Durchdringungspfad (1100), innerhalb der Zugangsbarriere (411), wobei das Bewegen und das Einrasten auf dem Erfassen basieren.

## Revendications

1. Système (1000) pour délivrer et récupérer des cibles d'irradiation (250) à travers un réacteur nucléaire (10), le système comprenant :
un système de chargement/déchargement fournissant des cibles d'irradiation (250), dans lequel le système de chargement/déchargement se situe à l'extérieur d'une barrière d'accès (411) du réacteur nucléaire (10) ;
un trajet de pénétration (1100) s'étendant à travers la barrière d'accès (411) et raccordant le système de chargement/déchargement à l'un d'une pluralité de tubes d'instrumentation s'étendant dans le réacteur nucléaire à l'intérieur de la barrière d'accès (411), dans lequel le trajet de pénétration peut être traversé par les cibles d'irradiation (250) jusqu'au tube d'instrumentation (50) ;
un mécanisme de rétention (650) couplé au trajet de pénétration (1100) au niveau d'une bride (1110) du tube d'instrumentation (50), dans lequel le mécanisme de rétention est configuré pour maintenir les cibles d'irradiation (250) dans le tube d'instrumentation (50) ; et
un système d'entraînement configuré pour déplacer les cibles d'irradiation (250) entre le tube d'instrumentation (50) et le système de chargement/déchargement, **caractérisé en ce que** le système d'entraînement comprend un plongeur (1350) qui est à même d'entraîner les cibles d'irradiation dans le tube d'instrumentation (50), le plongeur étant calibré pour se déplacer à travers le mécanisme de rétention (650) et pouvoir se rétracter à travers le mécanisme de rétention (650), dans lequel les cibles d'irradiation sont calibrées pour être bloquées par le mécanisme de rétention (650).

2. Système (1000) selon la revendication 1, dans lequel le mécanisme de rétention (650) est un ensemble de rétention comprenant un élément de restriction (651) sur le trajet de pénétration (1100), dans lequel l'élément de restriction est configuré pour bloquer sélectivement la surface de passage à l'intérieur du trajet de pénétration.

3. Système (1000) selon la revendication 2, dans lequel l'élément de restriction (651) est une fourche de restriction ayant au moins deux fourchons qui s'étendent autour de côtés opposés du trajet de pénétration (1100).

4. Système (1000) selon la revendication 3, dans lequel les fourchons de la fourche de restriction (651) sont espacés l'un de l'autre de moins d'une largeur des cibles d'irradiation (250) et dans lequel les fourchons comprennent des creux (6512) de surface correspondants en regard et espacés l'un de l'autre de plus d'une largeur des cibles d'irradiation.

5. Système (1000) selon la revendication 4, dans lequel la fourche de restriction (651) bloque le passage des cibles d'irradiation (250) à travers le trajet de pénétration (1100) avec les fourchons et dans lequel la fourche de restriction permet le passage des cibles d'irradiation à travers le trajet de pénétration lorsqu'elles sont déplacées de sorte que les creux de surface s'alignent sur le trajet de pénétration.

6. Système (1000) selon la revendication 4, dans lequel les fourchons de la fourche de restriction (651) sont espacés l'un de l'autre de plus d'une largeur du plongeur (1350).

7. Système (1000) selon la revendication 2, dans lequel l'ensemble de rétention (650) comprend en outre au moins un moteur connecté à l'élément de restriction (651), dans lequel le moteur entraîne l'élément de restriction pour bloquer ou débloquer la zone de passage dans le trajet de pénétration (1100).

8. Système (1000) selon la revendication 1, dans lequel le mécanisme de rétention (650) comprend un détecteur de position configuré pour détecter une position des cibles d'irradiation dans le trajet de pénétration.

9. Système (1000) selon la revendication 8, dans lequel le détecteur de position est au moins un commutateur en peigne (655).

10. Système (1000) selon la revendication 9, comprenant en outre :
un système d'entraînement configuré pour entraîner les cibles d'irradiation (250) dans le trajet de pénétration (1100) et dans le tube d'instrumentation (50), dans lequel le plongeur est un plongeur magnétisé (1350) ayant une largeur inférieure à celle des cibles d'irradiation (250) qui passent à travers le mécanisme de rétention (650).

11. Système (1000) selon la revendication 1, dans lequel le système comprend une pluralité des trajets de pénétration (1100) raccordant le système de chargement/déchargement à une pluralité de tubes d'instrumentation (50) et une pluralité des mécanismes de rétention (650) couplés chacun à l'un des trajets de pénétration.

12. Procédé de traitement de cibles d'irradiation (250) à travers un réacteur nucléaire pour générer des produits isotopes, le procédé comprenant :
la création d'un trajet de pénétration (1100) de l'extérieur d'une barrière d'accès (411) du réacteur nucléaire à un tube d'instrumentation (50) du réacteur nucléaire, le trajet de pénétration s'étendant à travers la barrière d'accès (411) ;
le déplacement d'une pluralité de cibles d'irradiation (250) dans le tube d'instrumentation (50) à travers le trajet de pénétration (1100) ;
l'engagement d'un mécanisme de rétention (650) dans le trajet de pénétration (1100) pour maintenir les cibles d'irradiation (250) dans le tube d'instrumentation (50), le mécanisme de rétention (650) étant couplé au trajet de pénétration (1100) au niveau d'une bride (1110) du tube d'instrumentation (50) ; et
l'évacuation du trajet de pénétration (1100) tandis que les cibles d'irradiation (250) sont maintenues dans le tube d'instrumentation (50) ;
**caractérisé en ce que** :
le déplacement des cibles d'irradiation (250) dans le tube d'instrumentation (50) comprend l'entraînement des cibles d'irradiation avec un plongeur (1350) dans le trajet de pénétration (1100) et dans lequel le plongeur est calibré pour se déplacer à travers le mécanisme de rétention engagé (650) dans le trajet de pénétration et dans lequel les cibles d'irradiation sont calibrées pour être bloquées par le mécanisme de rétention engagé (650).

13. Procédé selon la revendication 12, dans lequel l'engagement du mécanisme de rétention (650) comprend l'extension d'une fourche de rétention (651) pour bloquer le passage des cibles d'irradiation à travers le trajet de pénétration (1100) avec les fourchons de la fourche.

14. Procédé selon la revendication 12, comprenant en outre :
la détection d'une position des cibles d'irradiation (250) dans le trajet de pénétration (1100) à l'intérieur de la barrière d'accès (411), dans lequel le déplacement et l'engagement sont basés sur la détection.
